# EUROPEAN PATENT APPLICATION

(11) **EP 2 216 544 A2**
(43) Date of publication of application: **11.08.2010**
(21) Application number: 09380063.9
(22) Date of filing: 30.03.2009
(51) Int. Cl.: F03B 13/14, F03B 17/06

(54) **Efficient kinetic wave energy harnessing device**

(30) Priority: 09.01.2009 ES 200900010
(71) Applicant: Mendoza Bandera, Jose Manuel, Algeciras Cadiz (ES)
(72) Inventor: Mendoza Bandera, Jose Manuel, Algeciras Cadiz (ES)

(57) **Abstract**

**SUMMARY**

The presented invention refers to a group formed principally by some transporting guides with some bearing axes, which are fixed to a metallic structure with two levels, inferior and superior, by which some movable shovels made of hard aluminium move, one of the axes, the one nearest to the generator is connected to this by means of an interchange turn and joint system, connected directly to a principal axe of the generator, that would be connected with a multiplier that would pass from (20/35 r.p.m. to the speed of turn production of 1500 r.p.m.), where it would be installed electronically or manually, a metallic brake.

The generating set would be equipped with a compensation unit, electronic control system and refrigeration equipment. This is installed on a base that moves by means of some bearings inserted in some beams, which are fixed to the marine bottom, and where they are introduced, approximately 4 meters under the marine bed and fixation to a concrete base previously placed in this marine bed.

The base of the generating set would always remain on the level of the sea, thanks to a floater of great dimensions, which remains situated between the water surface and the base of the generator.

Finally, the metallic structure (transporter of shovels), it would be installed in its furthest axis to the generator an exit with elevating bearing, which connects directly with the superior part of the generator structure, which balance the shovel systems exactly on the levels of the sea, and alternating some hydraulic arms we could elevate all the set in case of no need of production or heavy swell, which could cause damages to the system.

## Description

### PRODUCTION DEVICE

This invention consists of a system, whereby wave movement may be absorbed efficiently, despite the fact that - until now - only some of this power was able to be harnessed. In the case of this device, the invention can be adjusted to: (Tides, wave height, wave frequency and direction)

### PREDECESSORS

There has been a myriad inventions regards wave-power harnessing until the present day.

Some are plagued by high production costs; others have problems with the Second Law of Thermodynamics; and in others, the energy produced is insignificant compared with the investment to be made.

After undertaking an infinite number of studies in the fields of engineering, mechanics and kinetics, the inventor of this device - Mr. Jose Manuel Mendoza Bandera - has found a way to optimize the harnessing of wave movement (wave wavelength) with the following characteristics:
Travelling blades shift along a two-levelled belt and deploy according to wind direction, tide or wave direction and wave height in order to take the optimum advantage of the immense potential offered - in this case - by the natural movement of the waves.

### DESCRIPTION

The efficient kinetic wave energy harnessing device is equipped with a conveyor belt with three parallel moving rails, turning on travelling, circular shafts (*cf. Fig. 10*) and is adapted onto an interior support structure (*cf. Fig. 18*).

Duralumin, fibre-glass or PVC - or any other suitable material, which is able to withstand the energy received from the waves by checking the same by blade size, to be determined by wave frequency and height, and generator type to be actuated - travelling blades are inserted on the conveyor belt (*cf. Fig. 23*) via each of the three shafts (*cf. Fig. 22*) and fixed onto the conveyor device (*cf. Fig. 23*) by a hinged bracket (*cf.Fig. 11*).

Each blade locates into a locking device (*cf. Fig. 24*) as it passes by the beginning of the belt and then rises to a higher level of the belt where it closes, thereby lowering higher wave or wind resistance; on returning to the lower level by gravity, the blades open again (*cf. Fig. 24*) to receive the waves once more.

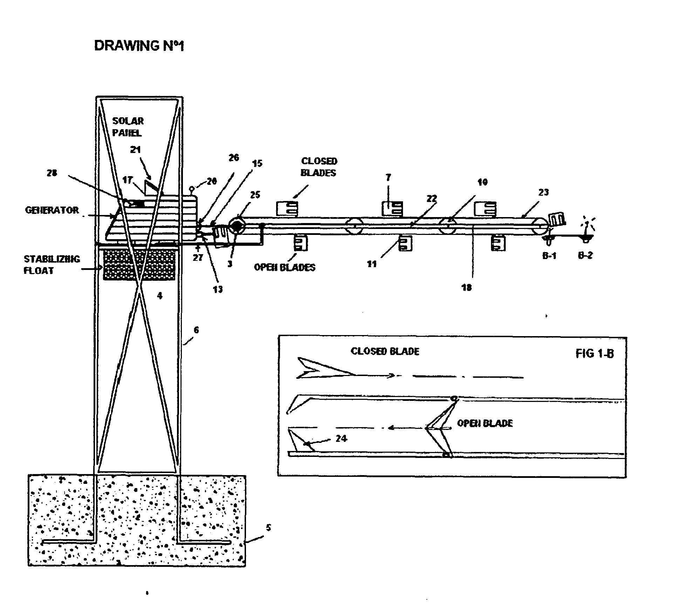

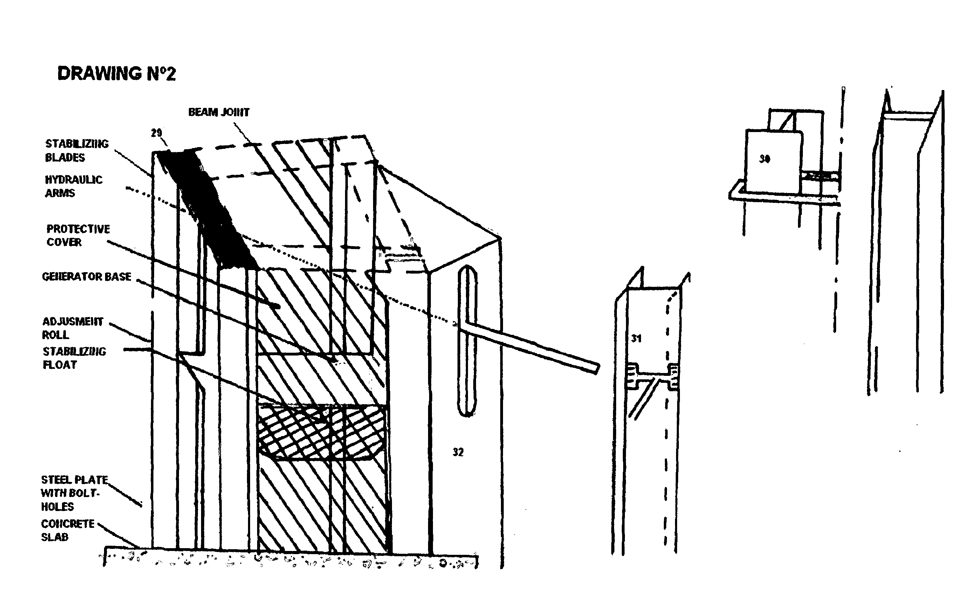

The blades reach a buffer on the conveyor rail device, allowing them to be deployed at maximum aperture and anchors at each extreme of the same (*cf.* *Fig. 1-B*).

Once the waves carry one - or several - of the open blades, movement is applied to the shafts (*cf. Fig 25*) connecting the rotation exchanger (*cf. Fig. 3*), which links to another shaft (*cf. Fig. 25*) fixed to a dimensioning pulley and connects the latter shaft (*cf. Fig. 15*) to the entry gearbox shaft (*cf. Fig. 26*); this adapts rotation to the revolutions required to enable the generator to work, either by belt-drive or another traction-type transmission device.

This device can also be installed in river currents, due to the fact that, on submerging the lower blades, they have the same effect: the device is completely adaptable to sea level and the river level at any given time, as will be seen later.

The whole blade shaft device and structure is fixed onto the generator chassis (*cf. Fig. 27*) via four hydraulic arms in Drawing N°1 (*cf. Fig 13*): two for the forward part of the belt and two for the rear, or end, of the belt. The device turns to the left or to the right depending upon the direction of wave attack, relying on the parameters signals received by an automaton or computer-controlled system from the anemometer (*cf. Fig. 20*) and float-ball valve (*cf.* *Fig.B-1 & B-2*);
... the device height is similarly controlled to avoid wave height exceed the blades substantially in storm conditions. The whole hydraulic and control system can be supplied by a solar panel (*cf. Fig. 21*), located on the generator array structure (*cf. Fig. 6*), or its own compensation and storage system (*cf. Fig. 28*).

The generator array is made up of the structure seen in the attached Drawing N° 2: four beams set in the sea bed and bolted to a foundation slab previously anchored to the bed itself (*cf. Fig. 5*). These beams are connected at their tops to avoid shifting (*cf. Fig. 29*), so that all the upper part of the beam structure remains closed and joined together. Likewise, the generator is also fastened to the beams via a bearing array anchored at two places on the beam, as can be observed in the Drawing (*cf. Figs. 30 & 31*), thereby remaining completely fast and only vertically mobile.

A stainless steel or duralumin base plate is installed underneath the generator over a floating stabilizer (*cf. Fig. 7*), so that the array always remains above sea-level independently of the tide, thus avoiding sharp rises and falls, due to the lateral and wedge-shaped front enclosure to break the waves (*cf. Fig. 32*). The rear part of the beams would be the only element allowing water entry via a stainless steel grille, which closes this section and allows water to enter and leave according to the tide, thus making the generator array effectively "float".

## Claims

1. This efficient wave kinetic energy production system is essentially **characterized by** a height adjustable, moving, tilting blade array that hamesses the kinetic energy of waves or river current. Said blades transmit wave or current power to travelling rails (two-level conveyor belt) linked to shafts: rotary movement is supplied to the generator's primary shaft via a belt-drive, rotation exchanger or dimensioning pulley (or another such exchange system between both). The travelling blade array are arranged on two levels, either open or closed to receive the wave or current; once the blade array rises to the upper level via a locking device, the array remains closed, with the lower array open. The whole array may be raised or lowered via hydraulic arms, controlled by means of device made up of two float-ball valves, an anemometer and an electronic automaton (the latter within the generator array). The whole array can rise and fall with the tides by direct connection of the control device to the generator, which is installed inside a dimensioning float. Changes in the water level only allows vertical movement, because the device is anchored to bearings and a stabilizer that turn through four beams (in a W) bolted to a concrete slab on the sea bed.

2. The characteristic feature of the device is its blade array adaptation to wave direction and height, negligible blade resistance at rest, and generator array adaptation to tides (or water levels) by hydraulically-controlled floatation.
